# EUROPEAN PATENT APPLICATION

(11) **EP 4 779 190 A1**
(43) Date of publication of application: **22.07.2026**
(21) Application number: 25214364.9
(22) Date of filing: 07.11.2025
(51) Int. Cl.: F16L 37/091

(54) **LOCK-CLAW FOR PNEUMATIC QUICK-CONNECT FITTING**

(30) Priority: 17.01.2025 IT 202500000732
(71) Applicant: C.Matic S.p.A., 20833 Giussano (Monza Brianza) (IT)
(72) Inventor: PUCCI, Flavio, 20843 Verano Brianza (Monza Brianza) (IT)
(74) Representative: Lunati & Mazzoni S.r.L.

(57) **Abstract**

A lock-claw (1) for pneumatic quick-connect fitting is provided, comprising an annular crown (2) developing around a central axis (2a) on a main plane (2b) orthogonal to the central axis (2a); and a coupling portion (3) protruding from the annular crown (2) radially to the central axis (2a) towards the central axis (2a) and developing along a humped development surface secant to the main plane (2b) so as to define a first humped zone (30) proximal to the annular crown (2) and a second flexible zone (31) separated from the annular crown (2) by the first zone (30); wherein the coupling portion (3) is divided into a plurality of tabs (4) distributed around the central axis (2a and mutually separated by inlets (5) extending radially to the central axis (2a) over part of the first zone (30) and the entirety of the second zone (31); and wherein each tab (4) is perforated by defining at least one slot (40).

## Description

The present invention relates to a lock-claw for pneumatic quick-connect fitting of the type specified in the preamble of claim 1.

In particular, the present invention relates to an annular device configured to prevent the extraction of a tubular element from a pneumatic fitting into which the element is inserted, by exerting a resisting force.

As is known, pneumatic fittings are elements that allow a tubular element, suitable for transferring a pressurised fluid, to be connected to another tubular element or apparatus.

Normally, to allow the coupling between quick-connect fitting and tubular element, the fitting comprises an annular lock-claw housed inside the fitting and adapted to interact with the tubular element when the latter is introduced into the fitting.

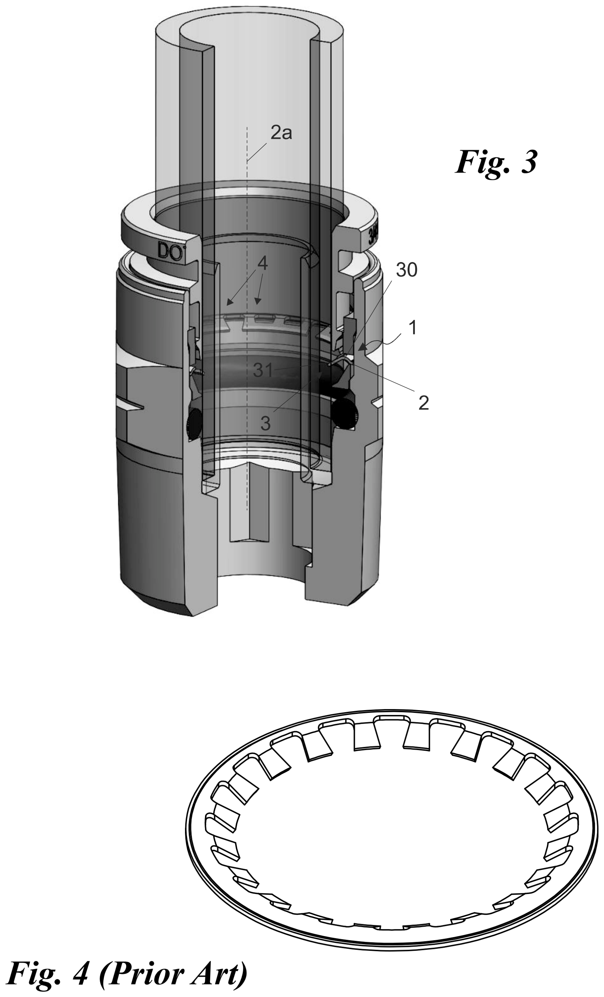

In particular, the lock-claw comprises, as shown in Fig. 4, a circular crown and a plurality of teeth protruding radially to the central axis of the lock-claw inwardly. These teeth are flexible and curved so as to allow, on one hand, the introduction of the tubular element into the fitting, and on the other hand, the locking of the same inside the fitting by resisting to the extraction.

The known technique described includes some significant drawbacks.

In particular, the known springs allow the tubular element to be locked, but do not exert an extremely high resisting force. Therefore, especially when the pressures of the fluid conveyed by the tubular element reach high levels, it is possible that the springs may fail to retain the tubular element.

One possible strategy to improve the resistance of the springs is to use more high-performing materials.

However, such an approach has a high economic impact.

Alternatively, it is possible to increase the circumferential dimension of the teeth by reducing the number of existing spacings between the teeth and increasing the distances between the spacings.

However, such springs have reduced flexibility and therefore increase the difficulty of coupling between tubular element and quick-connect fitting.

Even assuming a reduction in the circumferential dimensions of the connecting element between tooth and circular crown in order to increase the flexibility of the teeth, the lock-claw has the significant drawback of introducing considerable machining difficulties.

In this situation, the technical task underlying the present invention is to devise a lock-claw for pneumatic quick-connect fitting capable of substantially overcoming at least part of the aforementioned drawbacks.

Within said technical task, an important object of the invention is to achieve a lock-claw for pneumatic quick-connect fitting that allows both high ease of coupling between tubular element and fitting and high resistance to extraction thereof. Moreover, another important object of the invention is to implement a lock-claw for pneumatic quick-connect fitting that is simple to machine.

In conclusion, a further task of the invention is to achieve a lock-claw for pneumatic quick-connect fitting that can be produced economically.

The technical task and the specified objects are achieved by a lock-claw for pneumatic quick-connect fitting as claimed in claim 1.

Preferred technical solutions are highlighted in the dependent claims.

The features and advantages of the invention will be clarified below by the detailed description of preferred embodiments of the invention, with reference to the accompanying drawings, in which:
**Fig. 1a** shows a perspective view of a lock-claw for pneumatic quick-connect fitting according to the invention in a first embodiment;
**Fig. 1b** illustrates a side view of the lock-claw of Fig. 1a;
**Fig. 1c** is a top view of the lock-claw of Figs. 1a-1b;
**Fig. 2a** shows a perspective view of a lock-claw for pneumatic quick-connect fitting according to the invention in a second embodiment;
**Fig. 2b** illustrates a side view of the lock-claw of Fig. 2a;
**Fig. 2c** is a top view of the lock-claw of Figs. 2a-2b;
**Fig. 3** represents a perspective view and partial section of a pneumatic fitting including the lock-claw of Figs. 2a-2c; and
**Fig. 4** shows a perspective view of a lock-claw for pneumatic quick-connect fitting of the known art.

In the present document, the measurements, values, shapes, and geometric references (such as perpendicularity and parallelism), when associated with words like "about" or other similar terms such as "approximately" or "substantially", are to be understood as being subject to measurement errors or inaccuracies due to production and/or manufacturing errors and, in particular, as allowing slight deviations from the value, measurement, shape or geometric reference with which they are associated. For example, such terms, when associated with a value, preferably indicate a deviation not greater than 10% of the value itself.

Moreover, when used, terms such as "first", "second", "upper", "lower", "main" and "secondary" do not necessarily identify an order, a priority of relationship or relative position, but may simply be used to more clearly distinguish between different components.

Unless otherwise specified, as will appear from the following discussions, it is considered that terms such as "treatment", "computing", "determination", "calculation", or the like, refer to the action and/or processes of a computer or similar electronic computing device that manipulates and/or transforms data represented as physical quantities, such as electronic quantities of registers of a computer system and/or memories into other data similarly represented as physical quantities within computer systems, registers or other memory, transmission or information display devices.

The measurements and data reported herein are to be considered, unless otherwise indicated, as carried out in ICAO International Standard Atmosphere (ISO 2533:1975).

With reference to the Figures, the lock-claw for pneumatic quick-connect fitting according to the invention is globally denoted by the number **1.**

The lock-claw 1 is adapted to allow the insertion, and subsequent locking thus resisting to extraction, of a tubular element inside a fitting, as for example shown in Fig. 3.

The lock-claw 1 comprises, in general terms, at least one annular crown **2** and a coupling portion **3.**

The annular crown 2 is the part of lock-claw 1 adapted to be peripherally engaged in the quick-connect fitting. The coupling portion 3 is, instead, the part of lock-claw 1 adapted to interact with the tubular element to achieve the locking.

Thus, the annular crown 2 develops around a central axis **2a.** The central axis 2a is a virtual axis. It is adapted to be aligned with the development axis of the fitting and of the tubular element when the coupling is carried out.

Moreover, the annular crown 2 develops on a main plane **2b.**

The main plane 2b is preferably a virtual plane. It is, more precisely, orthogonal to the central axis 2a. Thus, the main plane 2b is adapted to develop transversely to the tubular element when the latter is coupled with the fitting and the lock-claw 1 is in use.

The coupling portion 3 protrudes from the annular crown 2. Preferably, the coupling portion 3 protrudes radially to the central axis 2a and towards the central axis 2a. In other words, the coupling portion 3 protrudes internally to the annular crown 2. Moreover, the coupling portion 3 develops along a humped development surface. This means that the development surface has a conformation similar to a section of toroid, thus defining at least one peak portion where a hump is defined. Therefore, the development surface defines at least two different progressions. Consequently, the development surface intersects the main plane 2b.

The development of the coupling portion 3 is also such as to define a first zone **30** and a second zone **31.**

The first zone 30 is the humped part of the coupling portion 3. Preferably, in detail, the first zone 30 protrudes from the annular crown 2 with a first angle α. The first angle α is preferably comprised between 20° and 60° with respect to the main plane 2b.

Thus, the first zone 30 is proximal to the annular crown 2, particularly preferably adjacent.

The second zone 31 is, instead, separated from the annular crown 2 by the first zone 30. Therefore, the second zone 31 is the part of the coupling portion 3 corresponding to the free end.

Preferably, the second zone 31 protrudes from the first zone 30 with a second angle β. The second angle β is preferably comprised between 20° and 60° with respect to the main plane 2b. As evident, the second angle β has values opposite to the first angle α since the first zone 30 and second zone 31 protrude, respectively from the annular crown 2 and from the first zone 30, in opposite directions parallel to the central axis 2a. In other words, the coupling portion 3 protrudes radially to the central axis 2a and parallel to the central axis 2a in a first direction at the first zone, then humps and protrudes at the second zone 31 radially to the central axis 2a and parallel to the central axis 2a in a second direction, opposite to the first direction, and intersecting the main plane 2b.

The second zone 31 is also flexible. Therefore, it is the part that bends when the tubular element is inserted into the quick-connect fitting. Naturally, the first zone 30 may also be at least partially flexible.

The coupling portion 3, as in common springs, is thus divided into a plurality of tabs **4.** The tabs 4 are distributed around the central axis 2.

They are comparable to the teeth of the springs of the known art.

The tabs 4 are thus parts of the coupling portion 3 mutually separated by inlets **5.** The inlets 5 are recesses, that is, void spaces forming separation zones.

The inlets 5 thus extend radially to the central axis 2a over part of the first zone 30 and the entirety of the second zone 31.

The lock-claw 1 comprises further important features.

Advantageously, in fact, each of the tabs 4 is perforated. Therefore, each tab 4 defines at least one slot **40.**

The slot 40 is substantially a through-hole entirely delimited along its perimeter by the rest of the tab 4.

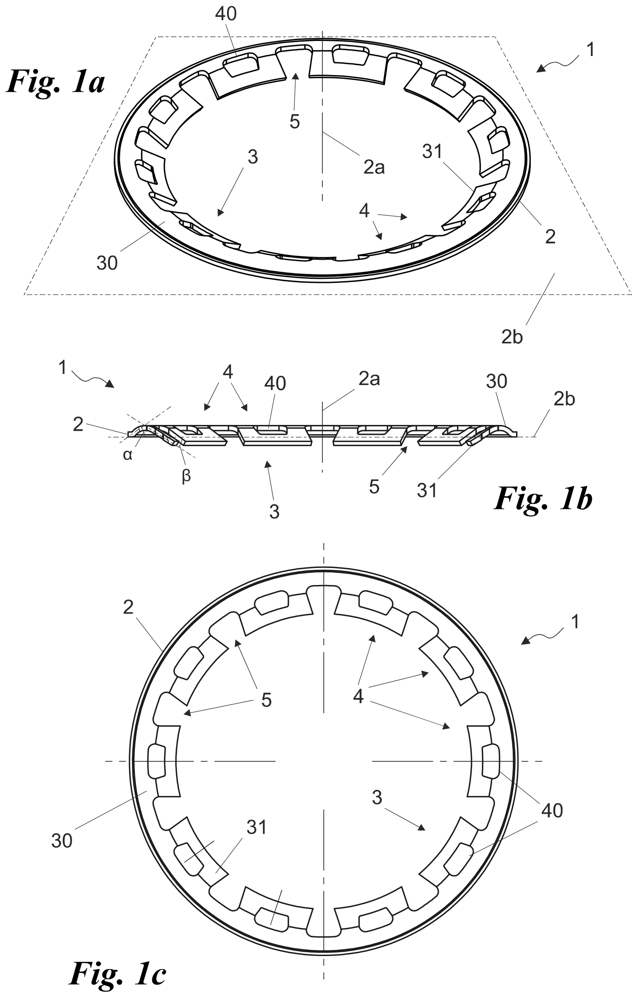

In a first embodiment, shown in Figs. 1a-1c, each tab 4 may include a single slot 40.

Alternatively, each of the tabs 4 may define a plurality of slots 40 distributed around the central axis 2a.

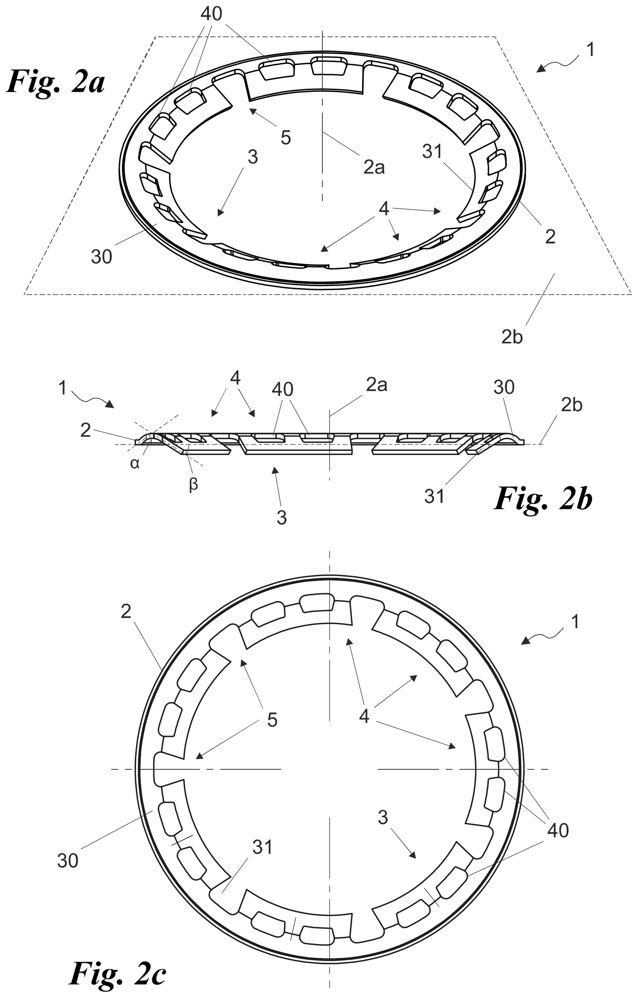

Indeed, in a second embodiment, shown in Figs. 2a-2c, each tab 4 may include two slots 40.

Naturally, other embodiments may be provided with more extensively perforated tabs 4.

The tabs 4 may also be distributed with more or less regularity around the central axis 2a. For example, the tabs 4 may be mutually equi-spaced around the central axis 2a.

Likewise, if present in a number greater than one on the tab 4, the slots 40 of each tab 4 may, in turn, be mutually equi-spaced around the central axis 2a.

The slots 40 may also have a shape similar to the inlets 5 truncated by the respective tab 4, in particular a portion developing around the central axis 2a. This means that, for example, slots 40 and inlets 5 may have identical shape in correspondence with the first zone 30 and may differ only in the second zone 31 in that, while the inlet 5 continues towards the central axis 2a, the slot 40 is delimited by a portion of tab 4. Moreover, one or more of the slots 40 and the inlets 5, and preferably all of them, have a convergent shape towards the central axis 2a.

In conclusion, the annular crown 2 and the coupling portion 3 are enbloc.

They preferably comprise steel, in particular of the AISI 301 steel.

The operation of the lock-claw 1 for pneumatic quick-connect fitting described above in structural terms is substantially similar to that of any lock-claw of the known art. However, the lock-claw 1 for pneumatic quick-connect fitting according to the invention achieves significant advantages.

Indeed, by virtue of the presence of perforated tabs 4, which can be extended circumferentially without reducing their flexibility, the lock-claw 1 for pneumatic quick-connect fitting allows to guarantee both high ease of coupling between the tubular element and the fitting and high resistance to its extraction.

Moreover, the lock-claw 1 for pneumatic quick-connect fitting is simple to machine since the perforation does not introduce complex geometric features or features that are difficult to obtain with known machining techniques.

In conclusion, the lock-claw 1 for pneumatic quick-connect fitting can be produced economically since it is not necessary to employ special materials or to provide unusual machining operations.

The invention is susceptible to variations falling within the scope of the inventive concept defined by the claims.

Within this scope, all the details may be replaced by equivalent elements, and the materials, shapes and dimensions may be any.

## Claims

1. Lock-claw (1) for pneumatic quick-connect fitting including:
- an annular crown (2) developing around a central axis (2a) in a main plane (2b) orthogonal to said central axis (2a); and
- a coupling portion (3) protruding from said annular crown (2) radially to said central axis (2a) toward said central axis (2a) and developing along a humped development surface AND secant to said main plane (2b) in such a way as to define a first hump zone (30) proximal to said annular crown (2) and a second flexible zone (31) separated from said annular crown (2) by said first zone (30);
- said coupling portion (3) is divided into a plurality of tabs (4) distributed around said central axis (2) and mutually separated by inlets (5) extending radially to said central axis (2a) over part of said first zone (30) and the entirety of said second zone (31);
and said lock-claw (1) being **characterised in that**
- each of said tabs (4) is perforated defining at least one slot (40).

2. Lock-claw (1) according to claim 1, wherein each of said tabs (4) defines a plurality of slots (40) distributed around said central axis (2a).

3. Lock-claw (1) according to any of the preceding claims, wherein said tabs (4) are mutually equi-spaced around said central axis (2a).

4. Lock-claw (1) according to at least claim 2, wherein said slots (40) of each said tab (4) are mutually equi-spaced around said central axis (2a).

5. Lock-claw (1) according to any of the preceding claims, wherein said slots (40) are similar in shape to said inlets (5) truncated by said respective tab (4).

6. Lock-claw (1) according to any of the preceding claims, wherein one or more of said slots (40) and said inlets (5) have a convergent shape toward said central axis (2a).

7. Lock-claw (1) according to any of the preceding claims, wherein said annular crown (2) and said coupling portion (3) are in one piece and comprise steel.

8. Lock-claw (1) according to the preceding claim, wherein said steel is AISI 301 steel.
